# EUROPÄISCHE PATENTSCHRIFT

(11) **EP 3 056 769 B1**
(45) Veröffentlichungstag und Bekanntmachung des Hinweises auf die Patenterteilung: **20.03.2019**
(21) Anmeldenummer: 16152177.8
(22) Anmeldetag: 21.01.2016
(51) Int. Cl.: F16H 61/00, F16H 61/30, F16D 21/06

(54) **KUPPLUNGSGETRIEBEEINHEIT MIT IN/AN GETRIEBEEINGANGSWELLE INTEGRIERTER KUPPLUNG**
TRANSMISSION UNIT WITH CLUTCH INTEGRATED IN/ON GEARBOX INPUT SHAFT
BOITE DE VITESSES COMPRENANT UN EMBRAYAGE INTEGRE DANS L'ARBRE PRIMAIRE

(30) Priorität: 12.02.2015 DE 102015202584
(43) Veröffentlichungstag der Anmeldung: 17.08.2016
(73) Patentinhaber: Schaeffler Technologies AG & Co. KG, 91074 Herzogenaurach (DE)
(72) Erfinder: Herkommer, Dominik, 69198 Schriesheim (DE); Baehr, Markus, 77815 Bühl (DE); Grethel, Marco, 77830 Bühlertal (DE)

(56) Entgegenhaltungen:
- US-A- 5 243 870
- US-A1- 2010 018 829
- US-A1- 2010 132 492

## Beschreibung

Die Erfindung betrifft eine Kupplungsgetriebeeinheit (d. h. ein Getriebe / eine Getriebeeinheit mit einer integrierten Kupplung; auch als Kupplungsgetriebe bezeichnet und bspw. als Doppelkupplungsgetriebe ausgeführt) für einen Antriebsstrang eines Kraftfahrzeuges, wie eines Pkws, Lkws, Busses oder landwirtschaftlichen Nutzfahrzeuges, mit einer, zumindest eine Teilkupplung aufweisenden Kupplungseinrichtung, wobei die zumindest eine Teilkupplung zwei miteinander drehfest verbindbare Kupplungsabschnitte aufweist, und mit einer Betätigungseinrichtung, die derart mit einem der Kupplungsabschnitte zusammenwirkt, dass die zumindest eine Teilkupplung in einer eingekuppelten oder einer ausgekuppelten Stellung angeordnet ist.

Beispielhafter Stand der Technik ist aus der DE 10 2005 014 633 A1 bekannt, die eine Kupplung, eine Kupplungsaktorik sowie ein Verfahren zum Betätigen zumindest einer Kupplung in einem Antriebsstrang eines Kraftfahrzeuges offenbart.

Aus der Veröffentlichung US 2010/018829 A ist ein automatisches Doppelkupplungsgetriebe umfassend eine Eingangskupplung, die eine Antriebsmaschine selektiv mit einem Elektromotor verbindet, bekannt. Der Ausgang des Elektromotors wiederum treibt ein Paar Zahnräder an, von denen eines in konstanter Kämmung mit einem ersten Zahnrad an einer ersten Hohlwelle und einem zweiten Zahnrad an einer zweiten Hohlwelle steht, das andere in konstanter Kämmung mit einem dritten Zahnrad an der ersten Hohlwelle und einem vierten Zahnrad an der zweiten Hohlwelle steht. An jeder Hohlwelle befinden sich zwischen jedem Paar Zahnrädern, die von dem Antrieb angetrieben werden, ein Paar Klauenkupplungen, die eines der beiden Zahnräder mit der zugehörigen Hohlwelle verbinden. Weiterhin treiben die zwei Hohlwellen jeweils einen Eingang von einem jeweiligen Paar Reibungskupplungen an, die ein jeweiliges Paar Vorgelegewellen oder Gegenwellen antreiben.

Im Weiteren ist der Anmelderin interner Stand der Technik bekannt, der noch nicht veröffentlicht worden ist, und eine Aktorik zur Kupplungsbetätigung aufweist, die prinzipiell in der Kupplung integriert ist.

Die aus dem Stand der Technik bekannten Systeme sind jedoch entweder relativ komplex aufgebaut oder nehmen immer noch einen relativ großen Bauraum ein.

Es ist daher die Aufgabe der vorliegenden Erfindung diese aus dem Stand der Technik bekannten Nachteile zu beheben und eine in einem Antriebsstrang integrierte Kupplungsgetriebeeinheit zur Verfügung zu stellen, bei der weiterer Bauraum sowie weitere Bauteile eingespart werden können, wobei gleichzeitig die Abläufe vereinfacht werden sollen.

Dies wird erfindungsgemäß dadurch gelöst, dass die Kupplungseinrichtung derart in einem Getriebe mit nur einer Getriebeeingangswelle und zwei Abtriebswellen der Kupplungsgetriebeeinheit integriert ist, dass ein erster Kupplungsabschnitt drehfest mit einer Getriebeeingangswelle verbunden ist und ein zweiter Kupplungsabschnitt zumindest ein Zahnrad einer Übersetzungsstufe aufnimmt.

Damit ist die Kupplungseinrichtung / Kupplung in der Getriebeeingangswelle besonders platzsparend integriert. Insbesondere ist es von Vorteil, dass die bisher bekannten, axial zwischen der Ausgangswelle der Verbrennungskraftmaschine und dem Getriebe angeordneten Kupplungen entfallen können, wodurch vor allem Bauraum in axialer Richtung der Kupplungseinrichtung eingespart werden kann. Die Kupplungseinrichtung kann möglichst getriebeeingangswellennah, d.h. in einem radialen Bereich, der möglichst nah an der Getriebeeingangswelle liegt, integriert werden. Dadurch ist auch eine besonders kompakte Bauweise in radialer Richtung umgesetzt.

Weiterhin weist die Betätigungseinrichtung zumindest eine hydraulische Pumpe auf, wobei die zumindest eine Teilkupplung in Abhängigkeit einer Pumpenstellung / Stellung der zumindest einen Pumpe in der eingekuppelten oder der ausgekuppelten Stellung angeordnet ist, ist die Betätigungseinrichtung besonders leistungsfähig. Das liegt vor allem daran, dass die hydraulische Pumpe der Betätigungseinrichtung hohe Drücke aufbauen kann, um die benötigte Betätigungskraft für die Betätigungseinrichtung zu erzeugen. Weiter bevorzugt ist die Betätigungseinrichtung im Bereich der Pumpen dann als eine mitdrehende Aktorik ausgebildet, die mit dem entsprechenden Kupplungsabschnitt wirkverbunden ist.

Außerdem ist die zumindest eine Pumpe als eine, in zwei unterschiedlichen Förderrichtungen einstellbare Förderpumpe ausgebildet. Damit kann eine Pumpe zum hydraulischen Ansteuern mehrerer, unterschiedlichen Teilkupplungen zugeordneten Druckzylindern verwendet werden. Dadurch wird der Aufbau weiter vereinfacht.

Weitere vorteilhafte Ausführungsformen sind in den Unteransprüchen beansprucht und nachfolgend näher erläutert.

Zweckmäßig ist es, wenn die Betätigungseinrichtung einen ersten Druckzylinder aufweist, der in einer ersten Pumpenstellung in einer, die eingekuppelte Stellung erzwingenden, ersten Schaltposition, und in einer zweiten Pumpenstellung in einer, die ausgekuppelte Stellung erzwingenden, zweiten Schaltposition geschalten / bewegt / verschoben ist. Dadurch ist der Druckzylinder besonders kompakt in die Kupplungseinrichtung integriert.

In diesem Zusammenhang ist es auch vorzugsweise derart umgesetzt, dass der erste Druckzylinder mittels einer in der Getriebeeingangswelle integrierten Fluidversorgungsleitung mit der Pumpe verbunden ist / hydraulisch verbunden ist. Dadurch kann auf weitere, die Fluidversorgung bereitstellende Bauteile, wie Leitungsabschnitte oder Rohre verzichtet werden. Der Aufbau der Kupplungsgetriebeeinheit wird dadurch weiter vereinfacht.

Weist der der zweite Kupplungsabschnitt eine, ein Verschiebeteil (vorzugsweise in Form einer Schiebemuffe / Schiebehülse) umfassende Synchronisierungseinrichtung auf, welche Synchronisierungseinrichtung / welches Verschiebeteil in zumindest einer ersten Verschiebestellung das zumindest eine Zahnrad drehfest mit dem zweiten Kupplungsabschnitt verbindet und in einer zweiten Verschiebestellung derart angeordnet ist, dass ein Kraftfluss zwischen dem zumindest einen Zahnrad und dem zweiten Kupplungsabschnitt unterbrochen ist, ist die Kupplungseinrichtung besonders kompakt radial innerhalb des Zahnrades einer ohnehin vorhandenen Übersetzungsstufe der Getriebeeinheit eingesetzt.

Vorteilhaft ist es im Weiteren, wenn die Kupplungseinrichtung als Mehrfachkupplung, vorzugsweise als Doppelkupplung, ausgestaltet ist, wobei dann mehrere der Teilkupplungen an in axialer Richtung der Getriebeeingangswelle versetzten Wellenabschnitten angeordnet sind, wodurch eine besonders kompakte axiale Schachtelung der Teilkupplungen umgesetzt ist.

In diesem Zusammenhang sind die mehreren Teilkupplungen dann jeweils entweder einem Zahnrad oder mehreren, vorzugsweise zwei Zahnrädern jeweils zugeordnet. Dadurch wird der Aufbau der Kupplungsgetriebeeinheit weiter vereinfacht.

Zudem ist es dabei auch vorteilhaft, wenn die zumindest eine Pumpe einer oder zwei Teilkupplungen zugeordnet ist, wodurch der Aufbau weiter vereinfacht wird und die Ansteuerung besonders direkt geschieht.

So ist es weiterhin von Vorteil, wenn der erste Kupplungsabschnitt der zumindest einen Teilkupplung zumindest ein, vorzugsweise mehrere, relativ zueinander in axialer Richtung der Kupplungseinrichtung verschiebbar gelagerte/-s / verschiebbare/-s, erste/-s Scheibenelement/-e aufweist. Die Scheibenelemente sind dabei vorzugsweise als Lamellen / Reiblamellen ausgestaltet, weshalb der erste Kupplungsabschnitt dann auch als erstes Reibpaket bezeichnet ist. Dadurch lässt sich die benötigte Verbindungskraft zwischen dem ersten und dem zweiten Kupplungsabschnitt in einem eingekuppelten Zustand beliebig weit mit Zunahme der Scheibenelemente steigern.

Zudem ist es von Vorteil, wenn auch der zweite Kupplungsabschnitt der zumindest einen Teilkupplung zumindest ein, vorzugsweise mehrere, relativ zueinander in axialer Richtung verschiebbar gelagerte/-s / verschiebbare/-s, zweite/-s Scheibenelement/-e aufweist. Diese zweiten Scheibenelemente sind dabei weiter bevorzugt ebenfalls als Lamellen / Reiblamellen ausgebildet, wobei zumindest einige der zweiten Scheibenelemente jeweils zwischen zwei in axialer Richtung zueinander benachbart angeordneten, ersten Scheibenelementen angeordnet sind. Der zweite Kupplungsabschnitt, der derart ausgebildet ist, ist dann auch als zweites Reibpaket bezeichnet. Dadurch wird die Kraftübertragung im eingekuppelten Zustand weiter verbessert.

Weiterhin ist es vorteilhaft, wenn die zumindest eine Teilkupplung als trocken laufende oder nass laufende Reibkupplung / Reibungskupplung ausgestaltet ist. Ist die zumindest eine Teilkupplung als trocken laufende Teilkupplung ausgebildet, ist der zweite Kupplungsabschnitt weiter bevorzugt thermisch mit dem zumindest einen Zahnrad gekoppelt und/oder der erste Kupplungsabschnitt thermisch mit der Getriebeeingangswelle gekoppelt, so dass eine Wärmeübertragung zwischen diesen Bauteilen ermöglicht ist. Ist die zumindest eine Teilkupplung alternativ dazu als nass laufende Reibkupplung ausgestaltet, ist weiter bevorzugt eine Kühlölpumpe integriert, die die Teilkupplung im Bereich ihrer Kupplungsabschnitte vorzugsweise kühlt. Dadurch ist eine besonders leistungsfähige Kupplungseinrichtung umgesetzt.

In andern Worten ausgedrückt, geschieht durch den erfindungsgemäßen Gegenstand eine Integration einer Kupplungseinrichtung in ein Getriebe des Antriebsstranges, so dass insbesondere Bauraum und Bauteile eingespart werden können sowie Abläufe vereinfacht werden können. Dabei wird insbesondere vorgeschlagen, die Reibkupplung (Kupplungseinrichtung) in die Getriebeeingangswelle zu integrieren. Dies wird vor allem durch Kombination mit einer hydraulischen Pumpe umgesetzt, da hier hohe hydraulische Drücke möglich sind, mit denen die Kupplung (Kupplungseinrichtung) auch bei einem geringen Reibradius funktionsfähig ist. In einer weiteren Ausführungsform kann auch jeder Gang / jede Übersetzungsstufe mit seiner / ihrer eigenen Kupplung versehen werden, so dass eine Getriebeaktorik umfassend die Synchronisierungseinrichtung entfällt. Dadurch vereinfachen sich die Schaltabläufe weiter. Von Vorteil ist dabei insbesondere die räumliche Trennung der Teilkupplungen, die zu einem verbesserten Temperaturhaushalt führt. Die Getriebeeingangswelle und vorzugsweise auch die Zahnräder der Übersetzungsstufen wirken als thermische Massen. Auch von Vorteil ist es, dass der Bauraum und die Massenträgheit optimiert werden sowie der Lagerungsaufwand verringert wird, da es weniger ineinander verschachtelte Wellen gibt.

Die Erfindung wird nun nachfolgend anhand von Figuren näher erläutert, in welchem Zusammenhang auch mehrere Ausführungsbeispiele beschrieben sind.

Es zeigen:

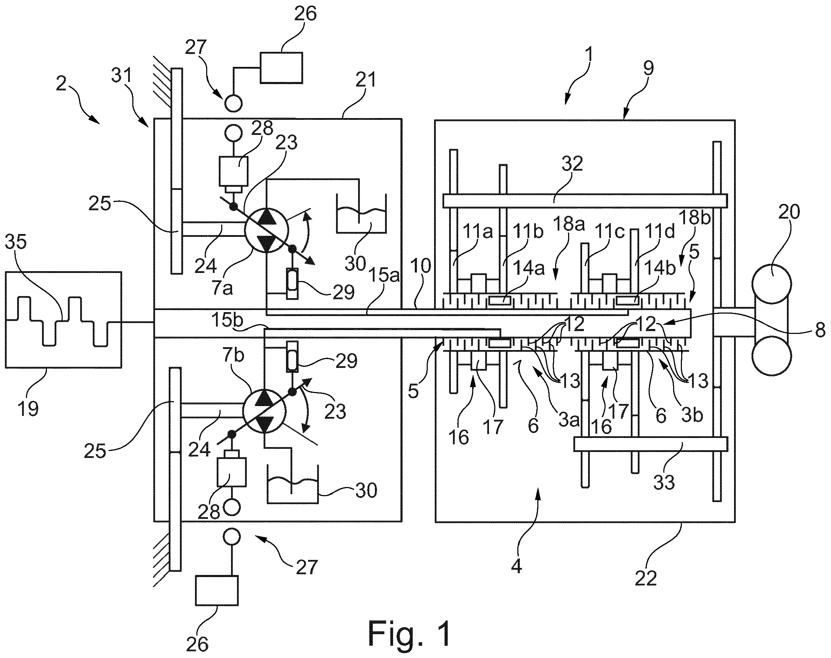

- Fig. 1: eine schematische Längsschnittdarstellung durch eine erfindungsgemäße Kupplungsgetriebeeinheit nach einem ersten vorteilhaften Ausführungsbeispiel, wobei einerseits besonders gut die beiden, hier integrierten Teilkupplungen, andererseits die zur Betätigung dieser Teilkupplungen vorgesehenen Pumpen und deren Anschluss an die Druckzylinder zu erkennen sind,

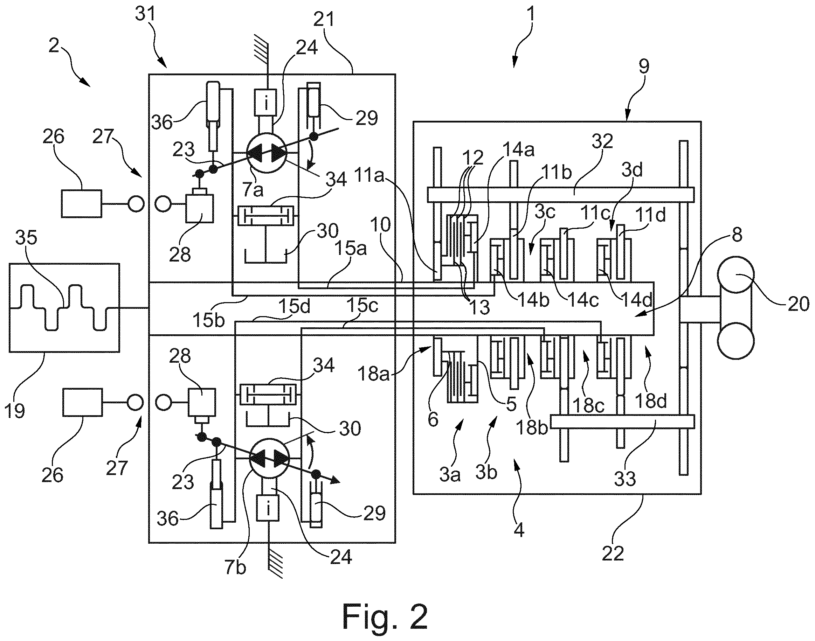

- Fig. 2: eine schematische Längsschnittdarstellung der erfindungsgemäßen Kupplungsgetriebeeinheit nach einem weiteren, zweiten vorteilhaften Ausführungsbeispiel, wobei im Gegensatz zum ersten Ausführungsbeispiel jeder Übersetzungsstufe / jedem Zahnrad eines Ganges eine eigene Teilkupplung zugeordnet ist, die über als Reversierpumpe ausgestaltete Pumpen betätigt sind.

Die Figuren sind lediglich schematischer Natur und dienen ausschließlich dem Verständnis der Erfindung. Die gleichen Elemente sind mit denselben Bezugszeichen versehen. Zudem sind die unterschiedlichen Ausführungsbeispiele frei miteinander kombinierbar.

Die Fig. 1 zeigt zunächst ein erstes Ausführungsbeispiel der erfindungsgemäßen Kupplungsgetriebeeinheit 1. Die Kupplungsgetriebeeinheit 1 ist hier in einem Antriebsstrang, nämlich zwischen einer Verbrennungskraftmaschine 19 , wie einem Diesel- oder Ottomotor, eines Kraftfahrzeuges, wie eines Pkws, Lkws, Busses oder landwirtschaftlichen Nutzfahrzeuges, und einem / mehreren angetriebenen Rädern 20 eingesetzt. Die Kupplungsgetriebeeinheit 1 weist zumindest eine, in dem ersten Ausführungsbeispiel zwei Teilkupplungen 3a und 3b auf, die einer Kupplungseinrichtung 4 angehören. Die Kupplungseinrichtung 4 kann somit als Mehrfachkupplung / Doppelkupplung bezeichnet werden.

Jede der Teilkupplungen 3a und 3b weist einen ersten Kupplungsabschnitt 5 sowie einen zweiten Kupplungsabschnitt 6 auf, welche Kupplungsabschnitte 5, 6 in Abhängigkeit des jeweiligen Zustandes der Teilkupplung 3a oder 3b drehfest miteinander verbunden sind (in einer angekuppelten Stellung) oder derart zueinander positioniert sind, dass kein Drehmoment von dem ersten auf den zweiten Kupplungsabschnitt 5, 6 übertragen wird (entspricht einer ausgekuppelten Stellung). Zumindest einer der beiden Kupplungsabschnitte 5, 6 ist dabei derart mit einer, (zumindest) eine hydraulische Pumpe 7a, 7b aufweisenden Betätigungseinrichtung 8 zusammenwirkend, dass die zumindest eine Teilkupplung 3a bzw. 3b in Abhängigkeit der Stellung der Pumpe 7a, 7b in einer eingekuppelten oder einer ausgekuppelten Stellung angeordnet ist. Die Kupplungseinrichtung 4 mitsamt ihrer Teilkupplungen 3a bzw. 3b ist in dem ersten Ausführungsbeispiel derart in einem Getriebe 9 der Kupplungsgetriebeeinheit 1 integriert, dass der erste Kupplungsabschnitt 5 drehfest mit einer Getriebeeingangswelle 10 des Getriebes 11 verbunden ist und der zweite Kupplungsabschnitt 6 zumindest ein Zahnrad 11 (Zahnräder nachfolgend mit den Bezugszeichen 11a bis 11d unterschieden) einer Übersetzungsstufe aufnimmt.

Der erste Kupplungsabschnitt 5 ist derart an der Getriebeeingangswelle 10 angebracht, bzw. mit diesem in Kontakt mit dieser, dass die Getriebeeingangswelle 10 als zusätzliche thermische Masse dient und eine Wärmeübertragung zwischen dem ersten Kupplungsabschnitt 5 und der Getriebeeingangswelle 10 ermöglicht ist.

Wie weiterhin in Fig. 1 zu erkennen, ist der erste Kupplungsabschnitt 5 derart ausgestaltet, dass er mehrere, in radialer Richtung ausgerichtete (radiale Richtung in Bezug auf die Drehachse der Getriebeeingangswelle 10) erste Scheibenelemente 12 aufweist. Diese ersten Scheibenelemente 12 sind dabei in Form von Lamellen / Reiblamellen ausgebildet. Auch der zweite Kupplungsabschnitt 6 ist derart ausgestaltet, dass er mehrere, in radialer Richtung ausgerichtete (zweite) Scheibenelemente 13 aufweist. Die zweiten Scheibenelemente 13 sind dabei in Form von Lamellen / Reiblamellen ausgebildet, sodass die jeweilige Teilkupplung 3a und 3b als Reibkupplung / Reibungskupplung / Lamellenkupplung ausgebildet ist. Jede der Teilkupplungen 3a und 3b ist hier trocken laufend, sodass die Kupplungseinrichtung 4 gesamtheitlich als eine trocken laufende Reibkupplung ausgebildet ist. Alternativ hierzu ist es jedoch in einer weiteren Ausführungsform auch möglich, die jeweilige Teilkupplung 3a, 3b / die Kupplungseinrichtung 4 gesamtheitlich als nass laufende Reibkupplung auszugestalten.

Die einzelnen ersten Scheibenelemente 12 sind in axialer Richtung der Getriebeeingangswelle 10 um einen gewissen Abstand voneinander beabstandet, sodass zumindest einige der zweiten Scheibenelemente 13 innerhalb dieses axialen Zwischenraums zwischen zweier benachbarter erster Scheibenelemente 12 positioniert sind. Gemäß dem Prinzip bekannter Reiblamellenkupplungen / Reibkupplungen sind einige der ersten oder zweiten Scheibenelemente 12, 13 in axialer Richtung relativ zueinander verschiebbar, wohingegen zumindest eines der ersten oder zweiten Scheibenelemente 12, 13 in axialer Richtung feststehend angeordnet ist. Dadurch sind die Scheibenelemente 12, 13 nach einem axialen Zusammenschieben durch die Betätigungseinrichtung 8 aneinander abgestützt und ein Reibkraftschluss in der eingekuppelten Stellung wird erzwungen. In der ausgekuppelten Stellung sind dann die einzelnen Scheibenelemente 12, 13 wiederum in axialer Richtung beabstandet bzw. derart angeordnet, dass sie kein Drehmoment zwischen der Getriebeeingangswelle 10 und dem jeweiligen Zahnrad 11 übertragen.

Die beiden Teilkupplungen 3a und 3b sind in axialer Richtung an unterschiedlichen Wellenabschnitten 18a und 18b positioniert. Die erste Teilkupplung 3a ist dabei an einem ersten Wellenabschnitt 18a der Getriebeeingangswelle 10 angeordnet. An einer der Verbrennungskraftmaschine 19 abgewandten Seite des ersten Wellenabschnittes 18a ist ein zweiter Wellenabschnitt 18b der Getriebeeingangswelle 10 angeordnet, in dem die zweite Teilkupplung 3b, beabstandet von dem ersten Wellenabschnitt 18a / der ersten Teilkupplung 3a angeordnet ist.

Die hier mit dem Bezugszeichen 3a bezeichnete, erste Teilkupplung weist einen ersten Kupplungsabschnitt 5 und einen zweiten Kupplungsabschnitt 6 auf, wobei zugleich auch die andere mit dem Bezugszeichen 3b gekennzeichnete, zweite Teilkupplung einen ersten Kupplungsabschnitt 5 und einen zweiten Kupplungsabschnitt 6 aufweist. Jedem der beiden Teilkupplungen 3a und 3b ist ein Druckzylinder 14a bzw. 14b zugeordnet, welche beiden Druckzylinder 14a und 14b unabhängig voneinander hydraulisch ansteuerbar sind. Der erste Druckzylinder 14a ist wie der zweite Druckzylinder 14b aufgebaut und funktionierend. Der erste Druckzylinder 14a ist innerhalb der ersten Teilkupplung 3a verbaut, d.h. in einem axialen Bereich des ersten Wellenabschnittes 18a. Der zweite Druckzylinder 14b ist innerhalb der zweiten Teilkupplung 3b positioniert / verbaut, d.h. in einem axialen Bereich des zweiten Wellenabschnittes 18b.

Jeder der beiden Druckzylinder 14a und 14b ist mit einer eigenen Pumpe 7a bzw. 7b hydraulisch verbunden. Der erste Druckzylinder 14a ist über eine (erste) Fluidversorgungsleitung 15 / 15a hydraulisch mit der (ersten) Pumpe 7a verbunden. Diese erste Fluidversorgungsleitung 15a ist zumindest teilweise in Form eines Kanals innerhalb der Getriebeeingangswelle 10 ausgebildet. Wiederum eine, unabhängig von der ersten Pumpe 7a arbeitende zweite Pumpe 7b ist über eine zweite Fluidversorgungsleitung 15b mit dem zweiten Druckzylinder 14b hydraulisch verbunden. Auch diese zweite Fluidversorgungsleitung 15b ist zumindest teilweise in Form eines Kanals innerhalb der Getriebeeingangswelle 10 ausgebildet. Demnach weist die Betätigungseinrichtung 8 einen ersten sowie einen zweiten Druckzylinder 14a, 14b auf, die jeweils in Abhängigkeit des durch die jeweilige Stellung der Pumpe 7a oder 7b und somit des erzeugten Betätigungsdruckes / Fluiddruckes in einer die eingekuppelte Stellung erzwingenden ersten Schaltposition oder in eine, die ausgekuppelte Stellung erzwingenden, zweiten Schaltposition geschalten sind.

Wie zudem in Fig. 1 besonders gut zu erkennen ist, sind die beiden Pumpen 7a und 7b im Wesentlichen gleich ausgebildet. Die als Förderpumpen ausgebildeten Pumpen 7a und 7b sind dabei in einem Pumpenaufnahmegehäuse 21 integriert / angeordnet. Das Pumpenaufnahmegehäuse 21 ist axial neben dem Getriebe 9 / dem Getriebegehäuse 22 des Getriebes 9 axial versetzt angeordnet. Die Pumpen 7a und 7b sind somit in einem, in Bezug auf die Getriebeeingangswelle 10 betrachtet, axial versetzt neben den Teilkupplungen 3a, 3b angeordneten Bereich platziert.

Jede der Pumpen 7a bzw. 7b ist dabei in ihrem Förderhub einstellbar. Wie in Fig. 1 schematisch dargestellt, ist die jeweilige Pumpe 7a bzw. 7b derart mit einem Stellglied 23 (eine Taumelscheibe bei Ausschaltung der Pumpe 7a bzw. 7b als Axialkolbenpumpe) versehen, dass abhängig von der die Pumpenstellung / den Pumpenzustand vorgebenden Stellung dieses Stellgliedes 23 die Fördermenge bzw. Förderrichtung der Pumpe 7a, 7b eingestellt ist. Eine Antriebswelle 24 der jeweiligen Pumpe 7a, 7b ist dabei mit einem Antriebszahnrad 25 drehfest verbunden, das wiederum im rotierenden Zustand, d.h. bei angetriebener Getriebeeingangswelle 10, in einen gehäusefesten, etwa verbrennungskraftmaschinengehäusefesten Abschnitt eingreift und dadurch (dauerhaft) angetrieben ist. Insbesondere, wenn die Kurbelwelle 35 der Verbrennungskraftmaschine 19 angetrieben ist, sind die beiden Pumpen 7a bzw. 7b dauerhaft angetrieben.

Das Stellglied 23 der Pumpe 7a bzw. 7b ist mit einem, durch ein Steuergerät 26 und einen Übertrager 27 angesteuerten Aktor 28 einstellbar. An einem weiteren Bereich des Stellgliedes 23 ist ein hydraulisch mit der Fluidversorgungsleitung 15a bzw. 15b verbundener Sensorkolben 29 angeordnet. Sowohl Aktor 28 als auch Sensorkolben 29 sind somit mit dem Stellglied 23 verbunden und stellen in Wechselwirkung den Förderhub und die Förderrichtung der Pumpe 7a bzw. 7b ein. In einer ersten eingestellten Förderrichtung (entspricht erster Pumpenstellung) fördert die Pumpe 7a bzw. 7b Druckfluid / Hydraulikmittel in die jeweilige Fluidversorgungsleitung 15a bzw. 15b hinein und beaufschlagt somit den jeweiligen Druckzylinder 14a bzw. 14b in seiner ersten Schaltposition mit einem Betätigungsdruck. In einer zweiten Förderrichtung (entspricht zweiter Pumpenstellung) fördert die Pumpe 7a, 7b wiederum das Druckfluid / Hydraulikmittel aus den Fluidversorgungsleitungen 15a und 15b hinaus in ein Reservoir 30, wodurch der jeweilige Druckzylinder 14a bzw. 14b in seiner zweiten Schaltposition befindlich ist und die Teilkupplung 3a, 3b in der ausgekuppelten Stellung ist.

Jede der beiden Pumpen 7a und 7b ist unabhängig voneinander mittels der Steuergeräte 26 ansteuerbar und somit schaltbar. Dadurch sind auch die beiden Teilkupplungen 3a und 3b unabhängig voneinander betätigbar. Das Pumpenaufnahmegehäuse 21 sowie die Pumpen 7a und 7b bilden folglich eine Pumpeneinheit 31.

Wie wiederum in Betrachtung des Getriebes 9 zu erkennen ist, ist in diesem Ausführungsbeispiel jede der Teilkupplungen 3a und 3b mit mehreren, nämlich zwei Zahnrädern 11a, 11b bzw. 11c, 11d verbindbar. An dem zweiten Kupplungsabschnitt 6 ist ein erstes Zahnrad 11a sowie ein zweites Zahnrad 11b angeordnet. Dabei ist in einer unbetätigten Stellung einer Synchronisierungseinrichtung 16 weder das erste Zahnrad 11a noch das zweite Zahnrad 11b drehfest mit dem zweiten Kupplungsabschnitt 6 verbunden, sondern lediglich in axialer Richtung zu diesen gehalten / gelagert. Die Synchronisierungseinrichtung 16 weist ein in Form einer Schiebemuffe ausgebildetes Verschiebeteil 17 auf. In einer ersten Verschiebestellung dieses Verschiebeteils 17, die axial gegenüber der in Fig. 1 dargestellten Neutralstellung in Richtung der Verbrennungskraftmaschine verschoben ist, verbindet das Verschiebeteil 17 den zweiten Kupplungsabschnitt 6 drehfest mit dem ersten Zahnrad 11a. Das erste Zahnrad 11a ist einer ersten Übersetzungsstufe bspw. einem ersten Gang des Getriebes 9 zugeordnet und weiter mit Verbindungszahnrädern bzw. einer ersten Abtriebswelle 32 drehfest verbunden. In einer zweiten axialen Verschiebestellung des Verschiebeteils 17 ist dann wiederum ein zweiter Gang geschaltet, so dass ein zweites Zahnrad 11b drehfest mit dem zweiten Kupplungsabschnitt 6 verbunden ist, während das erste Zahnrad 11a selbstverständlich nicht mehr drehfest mit dem zweiten Kupplungsabschnitt verbunden ist. Die zweite axiale Verschiebestellung ist dann erreicht, wenn das Verschiebeteil 17 in einer, der Verbrennungskraftmaschine abgewandten, axialen Richtung verschoben ist.

Die Zahnräder 11a, 11b sind derart am zweiten Kupplungsabschnitt 6 angeordnet, bzw. mit diesem in Kontakt, dass sie als thermische Massen dienen und eine Wärmeübertragung zwischen dem zweiten Kupplungsabschnitt 6 und dem jeweiligen Zahnrad 11a, 11b ermöglicht ist.

Auch die zweite Teilkupplung 3b ist wiederum mit der gleichen Anzahl an Zahnrädern, nämlich einem dritten Zahnrad 11c und einem vierten Zahnrad 11d zusammenwirkend. Das dritte Zahnrad 11c und das vierte Zahnrad 11d sind dabei wiederum an dem zweiten Kupplungsabschnitt 6 der zweiten Teilkupplung 3b angeordnet. In Abhängigkeit des Verschiebeteils 17, das ebenfalls gleich wie das Verschiebeteil 17 der ersten Teilkupplung 3a aufgebaut und funktionierend ist, ist entweder das dritte Zahnrad oder das vierte Zahnrad mit der Getriebeeingangswelle 10 in der eingekuppelten Stellung über weitere Zahnräder mit einer zweiten Abtriebswelle 33 verbunden.

In einem weiteren Ausführungsbeispiel ist es auch möglich, noch mehrere Zahnräder 11 je Teilkupplung 3a, 3b und somit mehrere Übersetzungsstufen / Gänge zu realisieren oder noch mehrere dieser Teilkupplungen 3a, 3b an der Getriebeeingangswelle 10 vorzusehen, die wiederum zumindest ein oder mehrere Zahnräder 11 aufnehmen.

In Fig. 2 ist dann ein weiteres vorteilhaftes Ausführungsbeispiel der erfindungsgemäßen Kupplungsgetriebeeinheit 1 dargestellt. Diese Kupplungsgetriebeeinheit 1 des zweiten Ausführungsbeispiels ist im Wesentlichen wie die des ersten Ausführungsbeispieles aufgebaut und funktionierend. Es wird daher nachfolgend lediglich auf die Unterschiede zwischen diesen Ausführungsbeispielen eingegangen.

Wie hinsichtlich des Getriebes 9 zunächst zu erkennen ist, weist diese Kupplungsgetriebeeinheit 1 nicht eine als Doppelkupplung ausgebildete Kupplungseinrichtung 4, sondern eine als Vierfachkupplung ausgestaltete Kupplungseinrichtung 4 auf, die nicht nur zwei Teilkupplungen 3a, 3b, sondern vier Teilkupplungen 3a bis 3d aufweist. In diesem Ausführungsbeispiel ist jeder Teilkupplung 3a bis 3d lediglich ein Zahnrad 11a bis 11d zugeordnet, das wiederum in Abhängigkeit der Stellung eines Druckzylinders 14a bis 14d (je Teilkupplung 3a bis 3d) drehfest mit der Getriebeeingangswelle 10 verbunden oder von dieser getrennt ist. In dieser Ausführung sind daher nicht nur zwei Druckzylinder, sondern vier Druckzylinder 14a bis 14d (je Teilkupplung 3a bis 3d ein Druckzylinder 14a bis 14d) vorhanden.

In diesem Ausführungsbeispiel ist zudem lediglich die erste Teilkupplung 3a als Reiblamellenkupplung / Mehrscheibenkupplung ausgebildet, wohingegen die zweiten bis dritten Teilkupplungen 3b bis 3d jeweils, gleich ausgebildet, als Einscheiben-Reibkupplungen ausgebildet sind und jeweils eine Anpressplatte, Gegendruckplatte und mindestens eine Reiblamelle aufweisen. Auch ist es in weiteren Ausführungen umgesetzt, alle vier Teilkupplungen 3a bis 3d im Wesentlichen gleich aufzubauen.

Da in dieser Ausführungsform wiederum lediglich nur zwei Pumpen 7a und 7b vorhanden sind, ist es nun notwendig, die Anbindung sowie die Ausgestaltung dieser Pumpen 7a und 7b etwas anders auszubilden. Die wiederum als Förderpumpen ausgestalteten Pumpen 7a bzw. 7b sind gleich aufgebaut, nun jedoch als Reversierpumpen ausgebildet. Das Stellglied 23 ist nun zusätzlich mit einem zweiten Sensorkolben 36 wirkverbunden. Folglich ist jede der Pumpen 7a, 7b nun mit zwei Fluidversorgungsleitungen 15a, 15b oder 15c und 15d in Abhängigkeit der Stellung eines Zweidruckventils 47 hydraulisch verbunden / verbindbar. Die einzelnen Fluidversorgungsleitungen 15a bis 15d sind wiederum zumindest in einem Abschnitt als Kanal in der Getriebeeingangswelle 10 integriert. In einem in das Pumpenaufnahmegehäuse 21 mündenden Bereich sind die einzelnen Fluidversorgungsleitungen 15a bis 15d dann entweder mit der ersten oder zweiten Pumpe 7a, 7b wirkverbunden. In einer ersten Stellung des Zweidruckventils 34 der ersten Pumpe 7a ist die Pumpe 7a mit der ersten Fluidversorgungsleitung 15a hydraulisch verbunden, wohingegen sie in einer zweiten Stellung des Zweidruckventils 34 mit der zweiten Fluidversorgungsleitung 15b verbunden ist. In einer Neutralstellung des Zweidruckventils 34 ist weder die erste noch die zweite Fluidversorgungsleitung 15a, 15b mit der ersten Pumpe 7a hydraulisch verbunden. Die zweite Pumpe 7b weist wiederum das gleiche Zweidruckventil 34 auf und ist somit in Abhängigkeit dessen Stellung / Schaltzustand entweder mit einer dritten Fluidversorgungsleitung 15c oder mit einer vierten Fluidversorgungsleitung 15d hydraulisch verbunden. Dabei sind die einzelnen Teilkupplungen 3a bis 3d bzw. dessen Druckzylinder 14a bis 14d unabhängig voneinander ansteuerbar.

Bei diesen Ausführungen ist es somit möglich, die Synchronisierungseinrichtung 16 samt Verschiebeteil entfallen zu lassen, da die jeweiligen Zahnräder 11a bis 11d mit dem zweiten Kupplungsabschnitt 6 der ihnen jeweils zugeordneten Teilkupplung 3a bis 3b dauerhaft drehfest verbunden sind.

In anderen Worten ausgedrückt, ist somit die Anwendung einer wellenintegrierten Hydraulikkupplung 4 in einem Doppelkupplungsgetriebe 1 umgesetzt. Pumpenmodul 31 und Getriebe 9 sind hier getrennt dargestellt, können aber genau so gut integriert sein. Das Doppelkupplungsgetriebe 9 ist zur einfacheren Darstellung mit vier Gängen skizziert. Selbstverständlich sind andere Gangzahlen auch möglich, beziehungsweise sinnvoller. Aus dem Pumpenteil 31 gehen in dem ersten Ausführungsbeispiel zwei Hochdruckleitungen 15a, 15b in die Welle 10, mit denen die Kupplungen 3a, 3b aktuiert werden. Es gibt daher nur eine Getriebeeingangswelle 10. Das logische Äquivalent zu den Getriebeeingangswellen 10 sind zwei Wellenabschnitte 18a, 18b, die sich auf der Getriebeeingangswelle 10 befinden. Die Kupplungen 3a, 3b befinden sich radial zwischen den ineinander laufenden Wellen 10, 32/33. Die Kupplungen 3a, 3b sind als Lamellenkupplungen ausgeführt, die über einen Zylinder 14a, 14b betätigt werden. Auf den Wellenabschnitten 18a, 18b befinden sich neben den Zahnrädern 11a-11d üblicherweise Synchronisierungen 16 mit Schiebemuffen 17. Die Zahnräder 11a-11d sind dabei so mit den Reiblamellen 12, 13 verbunden, dass diese bei trockener Ausführung als thermische Masse mitwirken. Im Inneren funktioniert die Welle 10 optional als thermische Masse.

Bei Ausführung als nasse Kupplung ist zusätzlich eine Kühlölpumpe integriert. Diese ist der Übersichtlichkeit halber nicht dargestellt. Alternativ zur Lamellenkupplung können auch andere Kupplungstypen verwendet werden, z.B. radiale Kupplungen.

Ein noch stärker integrierter Antriebsstrang ist in Fig. 2 im zweiten Ausführungsbeispiel gezeigt. Das System 1 unterscheidet sich von gewöhnlichen Getriebekonzepten dadurch, dass jeder Gang seine eigene Kupplung 3a, 3b, 3c, 3d zugeordnet bekommt. Dadurch können Synchronisierungen 16 entfallen und Schaltungen dementsprechend vereinfacht und beschleunigt werden. Der Antriebsstrang 2 ist zur besseren Übersichtlichkeit wieder nur mit vier Gängen dargestellt. Mehr Gänge können nach dem gleichen Prinzip zugefügt werden. Auch hier ist wieder das Kernstück die antriebsgebundene Verstell-Pumpe 7a, 7b. Diesmal ist die Pumpe 7a, 7b als Reversierpumpe mit zwei Förderrichtungen und auch zwei Sensorkolben 29, 36 ausgeführt. Die Pumpeneinheit 31 ist im drehenden System. Durch die Verbindung der beiden Pumpenausgänge mit dem Zweidruckventil 34 und dem Reservoir 30 wird ein Pumpen in beide Richtungen ermöglicht, wobei immer nur in eine Richtung Druck aufgebaut werden kann. Der Aktor 28 ist vorzugsweise als bidirektionaler Kraftaktor ausgeführt. Die Pumpenausgänge sind über Hochdruckleitungen 15a-d durch die Welle 10 mit der Kupplung 3a, 3b, 3c, 3d des jeweiligen Ganges verbunden. Die Kupplung 3a, 3b, 3c, 3d besteht aus mindestens einem Nehmerzylinder 14a-14d, sowie mindestens einer Anpressplatte, Gegendruckplatte und mindestens einer Reiblamelle. Die Kupplungen 3a, 3b, 3c, 3d können unterschiedlich dimensioniert sein, da der Reibeintrag in Abhängigkeit der verbundenen Gänge unterschiedlich ist. Im Beispiel ist die Kupplung 3a des ersten Ganges größer dargestellt.

Die Kupplungen 3a, 3b, 3c, 3d können trocken oder nass ausgeführt sein. Die Zahnräder 11a-d und die Welle 10 funktionieren als thermische Masse. Durch die Pumpenanordnung mit dem Zweidruckventil 34 können die beiden Gänge an einer Pumpe 7a, 7b als Teilgetriebe betrachtet werden, da zwischen diesen beiden Gängen keine Überschneidung stattfinden kann. Die Schaltabläufe werden in so fern vereinfacht, dass immer alle Gänge der gerade nicht aktiven / fördernden Pumpen 7a, 7b als nächstes eingelegt werden können. Einzig der andere Gang der gerade aktiven Pumpe 7a, 7b kann nicht über eine Überschneidungsschaltung eingelegt werden. Synchronisierungen, Getriebeaktorik und Vorwahlstrategien entfallen.
- 18b: zweiter Wellenabschnitt
- 18c: dritter Wellenabschnitt
- 18d: vierter Wellenabschnitt
- 19: Verbrennungskraftmaschine
- 20: Rad / Abtrieb / Abtriebseinheit
- 21: Pumpenaufnahmegehäuse
- 22: Getriebegehäuse
- 23: Stellglied
- 24: Antriebswelle
- 25: Antriebszahnrad
- 26: Steuergerät
- 27: Übertrager / Überträger
- 28: Aktor
- 29: Sensorkolben
- 30: Reservoir
- 31: Pumpeneinheit
- 32: erste Abtriebswelle
- 33: zweite Abtriebswelle
- 34: Zweidruckventil
- 35: Kurbelwelle
- 36: zweiter Sensorkolben

## Patentansprüche

1. Kupplungsgetriebeeinheit (1) für einen Antriebsstrang (2) eines Kraftfahrzeuges mit einem Getriebe (9) mit einer einzigen Getriebeeingangswelle (10) und zwei Abtriebswellen (32, 33), mit einer, zumindest eine Teilkupplung (3a, 3b, 3c, 3d) aufweisenden Kupplungseinrichtung (4), wobei die zumindest eine Teilkupplung (3a, 3b, 3c, 3d) zwei miteinander drehfest verbindbare Kupplungsabschnitte (5, 6) aufweist, und mit einer Betätigungseinrichtung (8), die derart mit einem der Kupplungsabschnitte (5, 6) zusammenwirkt, dass die zumindest eine Teilkupplung (3a, 3b, 3c, 3d) in einer eingekuppelten oder einer ausgekuppelten Stellung angeordnet ist, wobei die Kupplungseinrichtung (4) derart in dem Getriebe (9) integriert ist, dass ein erster Kupplungsabschnitt (5) jeder Teilkupplung (3a, 3b, 3c, 3d) drehfest mit der Getriebeeingangswelle (10) verbunden ist und ein zweiter Kupplungsabschnitt (6) jeder Teilkupplung (3a, 3b, 3c, 3d) zumindest ein Zahnrad (11) einer Übersetzungsstufe aufnimmt, und wobei die Betätigungseinrichtung (8) zumindest eine hydraulische Pumpe (7a, 7b) aufweist, wobei die zumindest eine Teilkupplung (3a, 3b, 3c, 3d) in Abhängigkeit einer Pumpenstellung der Pumpe (7a, 7b) in der eingekuppelten oder der ausgekuppelten Stellung angeordnet ist, **dadurch gekennzeichnet, dass** die zumindest eine Pumpe (7a, 7b) als eine, in zwei unterschiedlichen Förderrichtungen einstellbare Förderpumpe ausgebildet ist.

2. Kupplungsgetriebeeinheit (1) nach Anspruch 1, **dadurch gekennzeichnet, dass** die Betätigungseinrichtung (8) einen ersten Druckzylinder (14a) aufweist, der in einer ersten Pumpenstellung in einer, die eingekuppelte Stellung erzwingenden, ersten Schaltposition, und in einer zweiten Pumpenstellung in einer, die ausgekuppelte Stellung erzwingenden, zweiten Schaltposition geschalten ist.

3. Kupplungsgetriebeeinheit (1) nach Anspruch 2, **dadurch gekennzeichnet, dass** der erste Druckzylinder (14a) mittels einer in der Getriebeeingangswelle (10) integrierten Fluidversorgungsleitung (15) mit der zumindest einen Pumpe (7a, 7b) verbunden ist.

4. Kupplungsgetriebeeinheit (1) nach einem der Ansprüche 1 bis 3, **dadurch gekennzeichnet, dass** der zweite Kupplungsabschnitt (6) eine, ein Verschiebeteil (17) umfassende Synchronisierungseinrichtung (16) aufweist, die in zumindest einer ersten Verschiebestellung das zumindest eine Zahnrad (11) drehfest mit dem zweiten Kupplungsabschnitt (6) verbindet und in einer zweiten Verschiebestellung derart angeordnet ist, dass ein Kraftfluss zwischen dem zumindest einen Zahnrad (11) und dem zweiten Kupplungsabschnitt (6) unterbrochen ist.

5. Kupplungsgetriebeeinheit (1) nach einem der Ansprüche 1 bis 4, **dadurch gekennzeichnet, dass** die Kupplungseinrichtung (4) als Mehrfachkupplung ausgestaltet ist, wobei mehrere Teilkupplungen (3a, 3b, 3c, 3d) an in axialer Richtung der Getriebeeingangswelle (10) versetzten Wellenabschnitten (18a, 18b, 18c, 18d) angeordnet sind.

6. Kupplungsgetriebeeinheit (1) nach Anspruch 5, **dadurch gekennzeichnet, dass** einer oder zwei Teilkupplungen (3a, 3b, 3c, 3d) zumindest eine Pumpe (7a, 7b) zugeordnet ist.

7. Kupplungsgetriebeeinheit (1) nach einem der Ansprüche 1 bis 6, **dadurch gekennzeichnet, dass** der erste Kupplungsabschnitt (5) der zumindest einen Teilkupplung (3a, 3b, 3c, 3d) mehrere, relativ zueinander in axialer Richtung verschiebbare, erste Scheibenelemente (12) aufweist.

8. Kupplungsgetriebeeinheit (1) nach einem der Ansprüche 1 bis 7, **dadurch gekennzeichnet, dass** der zweite Kupplungsabschnitt (6) der zumindest einen Teilkupplung (3a, 3b, 3c, 3d) mehrere, relativ zueinander in axialer Richtung verschiebbare, zweite Scheibenelemente (13) aufweist.

## Claims

1. Clutch-transmission unit (1) for a drivetrain (2) of a motor vehicle, having a transmission (9) with a single transmission input shaft (10) and two drive output shafts (32, 33), having a clutch device (4) which has at least one partial clutch (3a, 3b, 3c, 3d), wherein the at least one partial clutch (3a, 3b, 3c, 3d) has two clutch portions (5, 6) which are connectable rotationally conjointly to one another, and having an actuating device (8) which interacts with one of the clutch portions (5, 6) such that the at least one partial clutch (3a, 3b, 3c, 3d) is arranged in an engaged or a disengaged setting, wherein the clutch device (4) is integrated into the transmission (9) such that a first clutch portion (5) of each partial clutch (3a, 3b, 3c, 3d) is connected rotationally conjointly to the transmission input shaft (10) and a second clutch portion (6) of each partial clutch (3a, 3b, 3c, 3d) holds at least one gearwheel (11) of a transmission ratio stage, and wherein the actuating device (8) has at least one hydraulic pump (7a, 7b), wherein the at least one partial clutch (3a, 3b, 3c, 3d) is arranged in the engaged or the disengaged setting in a manner dependent on a pump setting of the pump (7a, 7b), **characterized in that** the at least one pump (7a, 7b) is designed as a delivery pump which is settable in two different delivery directions.

2. Clutch-transmission unit (1) according to Claim 1, **characterized in that** the actuating device (8) has a first pressure cylinder (14a) which, in a first pump setting, is switched into a first switching position which forces the engaged setting to be assumed, and which, in a second pump setting, is switched into a second switching position which forces the disengaged setting to be assumed.

3. Clutch-transmission unit (1) according to Claim 2, **characterized in that** the first pressure cylinder (14a) is connected to the at least one pump (7a, 7b) via a fluid supply line (15) which is integrated in the transmission input shaft (10).

4. Clutch-transmission unit (1) according to any of Claims 1 to 3, **characterized in that** the second clutch portion (6) has a synchronizing device (16) which comprises a displaceable part (17) which, in at least one first displacement setting, connects the at least one gearwheel (11) rotationally conjointly to the second clutch portion (6), and which, in a second displacement setting, is arranged such that a force flow between the at least one gearwheel (11) and the second clutch portion (6) is interrupted.

5. Clutch-transmission unit (1) according to any of Claims 1 to 4, **characterized in that** the clutch device (4) is designed as a multiple clutch, wherein multiple partial clutches (3a, 3b, 3c, 3d) are arranged on shaft portions (18a, 18b, 18c, 18d) which are offset in an axial direction of the transmission input shaft (10).

6. Clutch-transmission unit (1) according to Claim 5, **characterized in that** one or two partial clutches (3a, 3b, 3c, 3d) are assigned at least one pump (7a, 7b) .

7. Clutch-transmission unit (1) according to any of Claims 1 to 6, **characterized in that** the first clutch portion (5) of the at least one partial clutch (3a, 3b, 3c, 3d) has multiple first disc elements (12) which are displaceable relative to one another in an axial direction.

8. Clutch-transmission unit (1) according to any of Claims 1 to 7, **characterized in that** the second clutch portion (6) of the at least one partial clutch (3a, 3b, 3c, 3d) has multiple second disc elements (13) which are displaceable relative to one another in an axial direction.

## Revendications

1. Unité de transmission à embrayage (1) pour une chaîne cinématique (2) d'un véhicule automobile avec une boîte de vitesses (9) avec un seul arbre primaire de boîte de vitesses (10) et deux arbres secondaires (32, 33), avec un dispositif d'embrayage (4) comportant au moins un embrayage partiel (3a, 3b, 3c, 3d), l'au moins un embrayage partiel (3a, 3b, 3c, 3d) comportant deux sections d'embrayage (5, 6) pouvant être reliées entre elles solidairement en rotation et avec un dispositif d'actionnement (8) qui interagit de telle sorte avec une des sections d'embrayage (5, 6) que l'au moins un embrayage partiel (3a, 3b, 3c, 3d) est disposé dans une position embrayée ou dans une position débrayée, le dispositif d'embrayage (4) étant intégré de telle sorte dans la boîte de vitesses (9) qu'une première section d'embrayage (5) de chaque embrayage partiel (3a, 3b, 3c, 3d) est reliée solidairement en rotation à l'arbre primaire de boîte de vitesses (10) et qu'une deuxième section d'embrayage (6) de chaque embrayage partiel (3a, 3b, 3c, 3d) reçoit au moins une roue dentée (11) d'un étage de démultiplication et le dispositif d'actionnement (8) comportant au moins une pompe hydraulique (7a, 7b), l'au moins un embrayage partiel (3a, 3b, 3c, 3d) étant disposé dans la position embrayée ou dans la position débrayée, en fonction d'une position de pompe de la pompe (7a, 7b), **caractérisée en ce que** l'au moins une pompe (7a, 7b) est réalisée sous la forme d'une pompe d'extraction pouvant être réglée dans deux directions différentes d'extraction.

2. Unité de transmission à embrayage (1) selon la revendication 1, **caractérisée en ce que** le dispositif d'actionnement (8) comporte un premier cylindre de pression (14a) connecté dans une première position de pompe dans une première position de commutation maintenant de force la position embrayée et connecté dans une deuxième position de pompe dans une deuxième position de commutation maintenant de force la position débrayée.

3. Unité de transmission à embrayage (1) selon la revendication 2, **caractérisée en ce que** le premier cylindre de pression (14a) est relié à l'au moins une pompe (7a, 7b) au moyen d'une conduite d'alimentation en fluide (15) intégrée dans l'arbre primaire de boîte de vitesses (10).

4. Unité de transmission à embrayage (1) selon l'une quelconque des revendications 1 à 3, **caractérisée en ce que** la deuxième section d'embrayage (6) comporte un dispositif de synchronisation (16) comprenant une pièce coulissante (17), ledit dispositif de synchronisation reliant solidairement en rotation l'au moins une roue dentée (11) à la deuxième section d'embrayage (6) dans au moins une première position de coulissement et étant disposé de telle sorte, dans une deuxième position de coulissement, qu'un flux de puissance entre l'au moins une roue dentée (11) et la deuxième section d'embrayage (6) est interrompu.

5. Unité de transmission à embrayage (1) selon l'une quelconque des revendications 1 à 4, **caractérisée en ce que** le dispositif d'embrayage (4) est réalisé sous la forme d'un embrayage multiple, plusieurs embrayages partiels (3a, 3b, 3c, 3d) étant disposés au niveau des sections d'arbre (18a, 18b, 18c, 18d) décalées dans la direction axiale de l'arbre primaire de boîte de vitesses (10).

6. Unité de transmission à embrayage (1) selon la revendication 5, **caractérisée en ce qu'**au moins une pompe (7a, 7b) est associée à un ou deux embrayages partiels (3a, 3b, 3c, 3d).

7. Unité de transmission à embrayage (1) selon l'une quelconque des revendications 1 à 6, **caractérisée en ce que** la première section d'embrayage (5) de l'au moins un embrayage partiel (3a, 3b, 3c, 3d) comporte plusieurs premiers éléments de disque (12) pouvant être coulissés les uns par rapport aux autres dans la direction axiale.

8. Unité de transmission à embrayage (1) selon l'une quelconque des revendications 1 à 7, **caractérisée en ce que** la deuxième section d'embrayage (6) de l'au moins un embrayage partiel (3a, 3b, 3c, 3d) comporte plusieurs deuxièmes éléments de disque (13) pouvant être coulissés les uns par rapport aux autres dans la direction axiale.
